(19) Europäisches Patentamt
European Patent Office
Office européen des brevets

(11) Publication number: 0 198 973
A2

(12) # EUROPEAN PATENT APPLICATION

(21) Application number: 85304777.7

(22) Date of filing: 04.07.85

(51) Int. Cl.$^4$: C 08 G 73/10
C 08 J 5/24, C 09 J 3/16

(30) Priority: 25.04.85 US 727127

(43) Date of publication of application:
29.10.86 Bulletin 86/44

(84) Designated Contracting States:
AT BE CH DE FR GB IT LI LU NL SE

(71) Applicant: Long, John V.
1756 E. Lexington Avenue
El Cajon California 92121(US)

(71) Applicant: Gagliani, John
6280 Lance Place
San Diego California 92120(US)

(72) Inventor: Long, John V.
1756 E. Lexington Avenue
El Cajon California 92121(US)

(72) Inventor: Gagliani, John
6280 Lance Place
San Diego California 92120(US)

(74) Representative: Spencer, Graham Easdale et al,
A.A. Thornton & CO Northumberland House 303-306,
High Holborn
London WC1V 7LE(GB)

(54) **Method of making imide precursor compositions for polimide adhesives and matric materials.**

(57) A method of making an imide precursor composition comprises:

(a) mixing a lactam (component A) with a tetracarboxylic acid dianhydride component (component B) comprising at least 50 mole % of 1, 2, 3, 4–butanetetra–carboxylic acid dianhydride in a mole ratio of A:B of from 0.1:1 to 10:1 to form an N, N-disubstituted bisimide dicarboxylic acid,

(b) dissolving the product of step (a) in an inert solvent, and

(c) mixing at least one aromatic diamine (component C) with the solution from step (b) to give a solution of an imide precursor which forms a polyimide on heating.

EP 0 198 973 A2

Croydon Printing Company Ltd

# Method of making imide precursor compositions for polimide adhesives and matrix materials

The present invention is concerned with polyimide resins and, more particularly, with a method of making imide precursor compositions and polyimides for use as adhesives and as matrix materials for fibre-reinforced composite structures.

U.S. Patents 4442283, 4444823, 4183838 and 4183839 disclose certain polyimide compositions which are flame resistant and useful as coatings and adhesives. The coating and adhesive compositions described in these patents are made by first preparing a suitable N,N'-disubstituted bisimide by reacting an aromatic tetracarboxylic acid dianhydride with a lactam or amino acid. This bisimide typically has the formula:

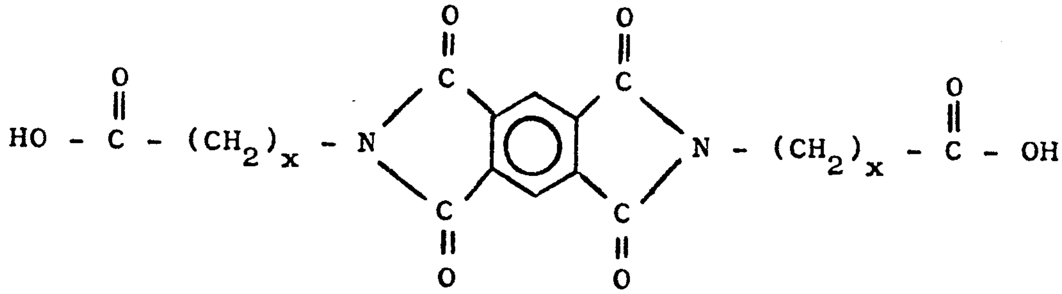

where x is a positive integer.

The polyimide-forming composition is prepared by dissolving the bisimide in an inert solvent and adding a suitable diamine to produce a viscous liquid containing an intimate, unpolymerised mixture of the bisimide and the diamine, which can be converted to a high molecular weight polymer by the application of heat which causes an exchange reaction to take place.

The following is an example of the exchange reaction which occurs on heating:

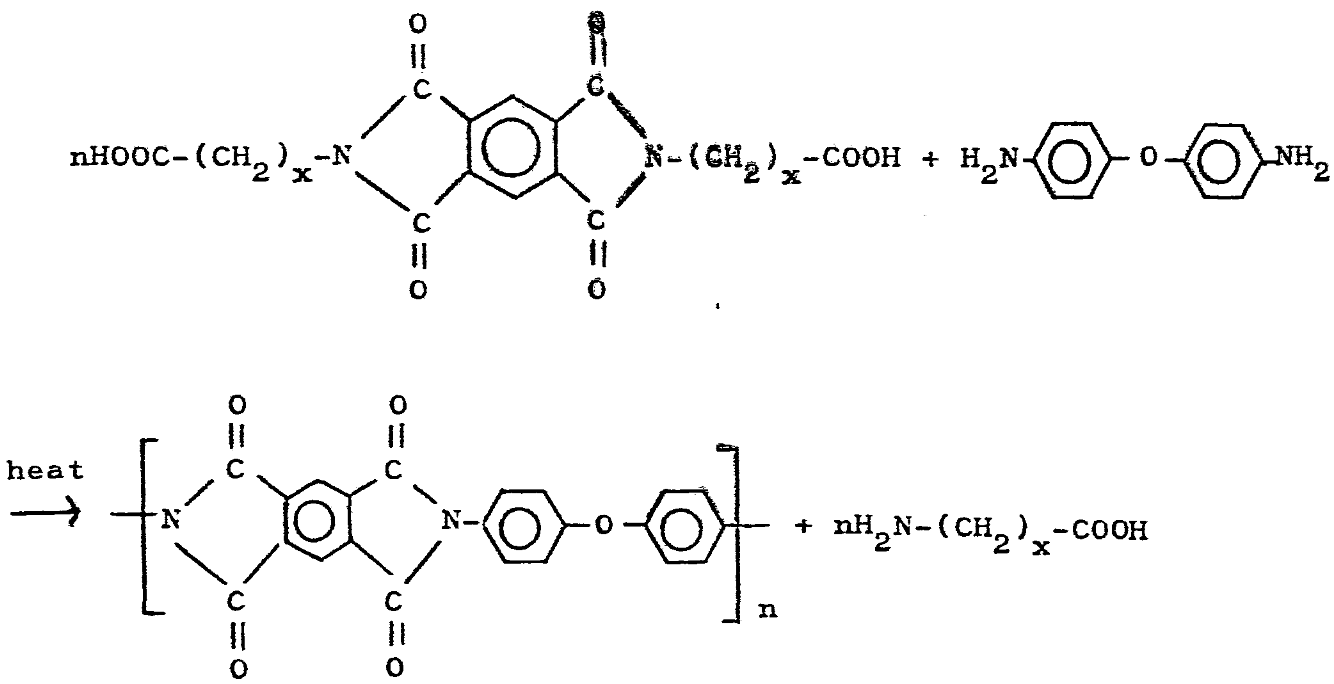


where n and x are positive integers.

When the unpolymerised mixture is coated on to a surface and heated in situ, the resulting coating is tough, highly adherent to a variety of surfaces, and has very few pinholes or bubbles. It has excellent peel strength and is resistant to high temperatures, peeling and abrasion.

The polyimide resins of the prior art, however,

are not ideally suited for several adhesive applications or for impregnating fibres in the manufacture of fibre-reinforced composite structures. Thus these resins tend to require undesirably high curing temperatures; at the high temperatures required, the water and alcohol released during polymerisation tend to form bubbles or voids in thicker composite structures. Furthermore, many of the adhesive solutions of the prior art are monomeric, rather than polymeric, and therefore release large quantities of water and alcohol on curing.

Thus there is a need for improved adhesives and matrix materials for fibre-reinforced composites having lower curing temperatures and which do not release alcohol in the final reaction so that the formation of bubbles or voids in the resulting composite structures is largely avoided.

We have now found that by using a particular non-aromatic tetracarboxylic acid dianhydride as the principal or sole dianhydride in the preparation of the bisimide, polyimide materials are obtained which are suitable for bonding together a variety of substrates and for bonding fibres in composite structures and which require lower curing temperatures than those based on aromatic dianhydrides and which are less prone to the formation of bubbles or voids during curing.

According to the present invention, therefore, there is provided a method of making an imide precursor composition, which comprises:

(a) mixing a lactam (component A) with a tetracarboxylic acid dianhydride component (component B) comprising at least 50 mole % of 1,2,3,4-butanetetra-carboxylic acid dianhydride in a mole ratio of A:B of from 0.1:1 to 10:1 to form an N,N-disubstituted bisimide dicarboxylic acid,

(b) dissolving the product of step (a) in an

inert solvent, and

(c) mixing at least one aromatic diamine (component C) with the solution from step (b) to give a solution of an imide precursor which forms a polyimide on heating.

The present invention also comprises a method of bonding together two surfaces, which comprises applying an imide precursor solution made by the method according to the invention to at least one of the surfaces, drying the applied coating, pressing the two surfaces together under pressure, and heating the assembly to bond the two surfaces together.

The present invention further comprises a method of making a fibre-reinforced composite structure, which comprises impregnating a porous sheet of woven or matted fibres with an imide precursor solution made by the method according to the invention, drying the impregnated sheet, placing at least one of the dried sheets in a mould, applying pressure thereto, and heating the sheet(s) to give the composite structure.

In order to obtain a polyimide having the desired physical and low temperature curing properties, it is necessary that at least 50 mole % of the dianhydride component should be 1,2,3,4-butanetetracarboxylic acid dianhydride (BTCA). The dianhydride component may consist solely of this compound, or may contain up to, but not including, 50 mole % of aromatic dianhydrides; preferred aromatic dianhydrides are 3,3',4,4'-benzophenonetetracarboxylic acid dianhydride and/or pyromellitic dianhydride.

Any suitable lactam can be reacted with the selected dianhydride to produce the bisimide. Preferably, the lactam has the formula:

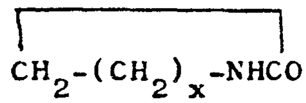

where x is an integer of from 2 to 7; best results are obtained with caprolactam (x = 4).

While any suitable reaction conditions can be used to prepare the bisimide, excellent results are obtained when the dianhydride is added to the lactam, the mixture is heated to a temperature of from 150°C to 200°C until the condensation reaction is complete (usually after 30 to 90 minutes), and the inert solvent is then added.

The preferred molar ratio of lactam:dianhydride is in the range of from 0.1:1 to 10:1. Good results are obtained when the ratio of lactam:dianhydride is from 1:1 to 3:1; optimum results are obtained when the ratio is about 2:1.

The bisimide produced by the reaction of caprolactam and BTCA has the following formula:

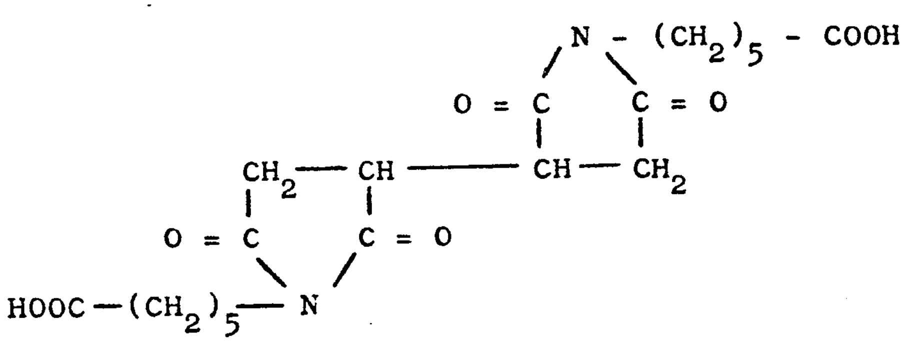

Any suitable inert solvent may be used to dissolve the bisimide; preferably at least 30% by weight of solvent (based on the weight of bisimide) is added.

Suitable solvents include, for example, N-methylpyrrolidone, N,N-dimethylformamide, N,N-dimethylacetamide, dimethylsulfoxide, or a mixture of two or more thereof.

As indicated in Example X of U.S. Patent 4442283, when a reactive, esterifying solvent is added to bisimides obtained using a dinahydride component having a high proportion of BTCA and a low proportion of BTDA, the resulting diesters tend to give coatings of reduced thermal stability. Using the inert solvents of the present invention and the curing conditions described below, excellent adhesives and matrix materials for fibre-reinforced composite structures are obtained even when using 100% BTCA as the dianhydride component.

Once the solvent and bisimide have been mixed (or the solvent mixed with the bisimide-producing reactants), the selected aromatic diamine (or diamines) is added to the solution. An approximately stoichiometric quantity of diamine to dianhydride is generally preferred.

Suitable aromatic diamines include, for example, 4,4'-diaminodiphenyl ether, 4,4'-(p-phenylenediisopropylidene)bisaniline, 4,4'-diaminodiphenylmethane, m-phenylenediamine, p-phenylenediamine, 4,4'-(m-phenylenediisopropylene)bisaniline, 2,2-bis[4-(4-aminophenoxy)-phenyl]hexafluoropropane, and mixtures of two or more thereof.

While any suitable reaction conditions can be used to prepare the imide precursor, it is preferred that the mixture is stirred for a period of 30 to 60 minutes at a temperature of from 40°C to 60°C to assure completion of the reaction between the diamine and the bisimide. At this point the solution is essentially an imide precursor dissolved in the solvent, which can be cured by the application of heat to give a polyimide resin, together with the formation of water.

Additives to improve various characteristics of

the final polyimide may be added. Any suitable additives can be used, such as surfactants, fillers, adhesion promoters, colourants, ultraviolent absorbers, or the like. Typical surfactants include Dow Corning Group's 190 or 193, FC430 from Minnesota Mining & Manufacturing Co., Zonyl FSC from E.I. duPont de Nemours & Co., and L550 from Union Carbide Corp. While any suitable concentration can be used, a concentration of from 0.01 to 2% by weight (based on the weight of the solution before drying) is preferred. Of these surfactants, the best results have been obtained with FC430. Suitable fillers and reinforcing additives include, for example, Kevlar aramid fibres, graphite fibres, glass fibres, carbon and graphite powders, Teflon fluorocarbon powders, metal powders, and mixtures of two or more thereof.

Macroballoons having diameters of 0.1 to 10 mm can be mixed into the adhesive in any desired quantity. Small quantities thicken the adhesive, while relatively large quantities produce a castable material suitable for the manufacture of light weight, strong, flame resistant shapes. Suitable macroballoon compositions for use in the present invention include, for example, ceramics, metals and synthetic resins.

When used as an adhesive, the solution of imide precursor may be partially dried to thicken the solution prior to application to the surfaces to be bonded. Alternatively, the solution can be coated on to one or both of the surfaces to be bonded, then partially dried to a tacky state before bringing the surfaces together and curing the resin.

In a preferred method of bonding using the adhesive composition of the invention, the solution is coated on to one or both of the surfaces to be bonded together and the solvent is evaporated, typically at a temperature of from $70^{\circ}C$ to $150^{\circ}C$ for a period of 10 to

60 minutes. The surfaces are then brought together and cured, as described below, or the adhesive film(s) may be further dried and pre-cured to give flexible, non-tacky films by heating at a temperature of from 150°C to 225°C for a period of 30 to 60 minutes. In either case, i.e. with or without pre-curing, the final curing is carried out by bringing the coated surfaces together at a temperature of from 200°C to 300°C for a period of 30 to 120 minutes, with a pressure of from about 10 to 1000 psi (69 to 6895kPa) applied for at least the first 2 to 20 minutes. A high strength, flexible, flame and heat resistant polyimide resin bond is obtained.

The adhesive composition of the present invention can be used to bond together any suitable surfaces and can be applied by any suitable method. Strong adhesive bonds are formed, for example, between aluminium/aluminium, steel/steel, titanium/titanium and any combination thereof. Glass and many ceramics can also be bonded. Any suitable coating technique can be used to apply the adhesive, such as spray, roller or brush coating.

The adhesive composition of the invention is especially useful for impregnating porous sheets, such as woven or matted high strength fibre fabrics containing fibres such as glass, graphite, aramid, boron or mixed fibres. In a preferred method, the porous sheets are first impregnated with the adhesive solution, for example by immersion, then dried sufficiently to remove most of the residual solvent. The tacky sheets are stacked in a desired arrangement and shape in a mould, a pressure of about 20 to 1000 psi (138 to 6895kPa) is applied, and the stacked sheets are heated at a temperature of from 175°C to 320°C for a period of 30 to 120 minutes to cure the polyimide resin. A well-consolidated composite structure is obtained, substantially free of bubbles or voids.

In the same way that the composition can be pre-cured when used as an adhesive, so the impregnated porous sheets can be pre-cured at a temperature of from 150°C to 225°C for a period of 30 to 60 minutes to produce flexible, non-tacky, fibre-reinforced sheets which can be stored, shipped, etc., before assembly in a mould for final consolidation and shaping. It is preferred that the pre-curing is carried out at a pressure of from 10 to 1000 psi (69 to 6895kPa) between polished platens in order to produce smooth sheets of uniform thickness which are substantially free of bubbles or voids.

Since no alcohol (only water) is produced as a by-product of the final polyimide-forming reaction, the effects of outgasing during curing, such as the formation of voids in the final fibre-reinforced composite products, are greatly reduced in the products obtained according to the method of the present invention.

In order that the invention may be more fully understood, the following examples are given by way of illustration only.

Example 1

198.1g (1.0mole) of 1,2,3,4-butanetetracarboxylic acid dianhydride (BTCA) and 226.2g (2.0mole) of caprolactam were placed in a 1-litre flask and the mixture heated to 175°C and maintained at that temperature for 30 minutes. The mixture was then cooled to 100°C, 300g of N-methylpyrrolidone was added, and the mixture stirred until homogeneous. The mixture was then cooled to 45°C, 198.1g (1.0mole) of 4,4'-diaminodiphenylmethane was added, and the mixture stirred for 50 minutes at 50°C. Additional N-methylpyrrolidone was added to dilute the solution to the desired viscosity. The solution of resin was brushed on to one surface of each of two aluminium plates to a thickness of about 4mm and the plates were dried in an air circulating oven at a temperature of 95°C for one hour. The dry coated sheets were then pre-cured at

a temperature of 175°C for 40 minutes to produce flexible, non-tacky, coatings on the surfaces. The coated surfaces were brought together in a press and pressed together at 400 psi (2758kPa) while the temperature was increased to 260°C and held at this temperature for 10 minutes. The pressure was then released but the temperature was maintained for another hour. The plates were found to be very securely bonded together; the lap shear strength value of the aluminium-to-aluminium bond was about 1500 psi (10342kPa) at room temperature.

Example 2

The procedure of Example 1 was repeated, except that the two plates bonded together were: (a) titanium/ titanium; (b) steel/steel; (c) steel/aluminium; and (d) glass/glass. In each case an excellent bond was obtained, with shear strength values exceeding 1000 psi (6895kPa).

Example 3

The procedure of Example 1 was repeated using various quantities of caprolactam. Whereas Example 1 used 226.2g (2.0mole) of caprolactam to give a mole ratio of caprolactam:BTCA of 2:1, in these experiments the following quantities of caprolactam were used: (a) 56.5g (0.5mole, 0.5:1); (b) 113g (1.0mole, 1:1); (c) 452g (4.0mole, 4:1); and (d) 678g (6.0mole, 6:1). The characteristics of the adhesive products obtained from these tests were generally excellent. The adhesive produced in (b) had the best shear strength. This indicates that the best results are obtained when the mole ratio of lactam:dianhydride is in the range 1:1 to 3:1.

Example 4

The procedure of Example 1 was repeated, except that instead of N-methylpyrrolidone, the following solvents were used: (a) N,N-dimethylformamide; (b) N,N-dimethylacetamide; (c) ethanol; and (d) acetone. In (a) and (b), where a non-reactive solvent was used, an excellent

adhesive was obtained. When a reactive solvent was used, as in (c), the resulting adhesive produced excessive amounts of volatiles during curing. (d) did not produce a clear solution.

Example 5

The procedure of Example 1 was repeated with three additional samples, the only difference being the addition of a surfactant to the solution. The following surfactants were added after the diamine was added: (a) 10g of Zonyl FSC fluorocarbon; (b) 8g of Dow Corning 190 silicone surfactant; and (c) 10g of FC430. Using these surfactants, dried adhesives of improved uniformity were obtained.

Example 6

A similar procedure to that of Example 1 was carried out, except that the BTCA, caprolactam, and N-methylpyrrolidone were pre-mixed and the mixture was then heated to produce the bisimide. The subsequent steps of Example 1 were then carried out. An excellent adhesive was obtained.

Example 7

The procedure of Example 1 was repeated, except that instead of BTCA alone, the following mixtures were used as the dianhydride component: (a) 99g (0.5mole) of BTCA and 161g (0.5mole) of 3,3',4,4'-benzophenonetetracarboxylic acid dianhydride (BTDA); (b) 49.5g (0.25mole) of BTCA and 241g (0.75mole) of BTDA; and (c) 149g (0.75 mole) of BTCA and 80.5g (0.25mole) of BTDA. An excellent adhesive was produced in (c) and a good adhesive in (a). In (b), in which more than 50 mole % of BTDA was used, higher temperatures were required in order to cure the resin and achieve a good bond.

Example 8

A sample of the adhesive solution of Example 1 was coated on to a narrow strip of Kapton film

(manufactured by du Pont) and the solvent evaporated at a temperature of 125°C for 30 minutes. The imide composition was then pre-cured at a temperature of 200°C for a period of 30 minutes. The result was a non-tacky, coated Kapton tape which is flexible at room temperature. The tape was tightly wrapped around a copper wire in an overlapping spiral and the wrapped wire heated at 500°C for 10 minutes to cure the polyimide. A well bonded, electrically insulating, high temperature resistant covering was obtained.

Example 9

Samples of the adhesive solution of Example 1 were used to thoroughly impregnate various fabric swatches: (a) a tow of high-strength graphite fibres, available from Union Carbide under the "Thornel" trademark, was immersed in the resin liquid and then placed in a mould; (b) five sheets of woven glass fabric cloth were soaked in the resin liquid and then stacked in a press mould; (c) two sheets of woven Kevlar aramid fibre (manufactured by du Pont) and a sheet of glass fibre mat were soaked in the liquid resin and then placed in a mould with the glass fibre mat between the fabric sheets. In each case, the solvent was first evaporated by heating the moulds at a temperature of 120°C for one hour, then the resin was cured by heating the moulds at 220°C for four hours at a pressure of 100 psi (689kPa). In each case, a high strength, well consolidated and bonded composite structure with few voids was obtained.

Claims:

1. A method of making an imide precursor composition, which comprises:

(a) mixing a lactam (component A) with a tetracarboxylic acid dianhydride component (component B) comprising at least 50 mole % of 1,2,3,4-butanetetracarboxylic acid dianhydride in a mole ratio of A:B of from 0.1:1 to 10:1 to form an N,N-disubstituted bisimide dicarboxylic acid,

(b) dissolving the product of step (a) in an inert solvent, and

(c) mixing at least one aromatic diamine (component C) with the solution from step (b) to give a solution of an imide precursor which forms a polyimide on heating.

2. A method according to claim 1, in which component A is a lactam of the formula:

$$H_2C-(CH_2)_x-NHCO$$

where x is an integer of from 2 to 7.

3. A method according to claim 1 or 2, in which up to, but not including, 50 mole % of component B is 3,3',4,4'-benzophenonetetracarboxylic acid dianhydride and/or pyromellitic dianhydride.

4. A method according to any of claims 1 to 3, in which the solvent is N-methylpyrrolidone, N,N'-dimethylformamide, N,N'-dimethylacetamide, dimethylsulphoxide, or a mixture of two or more thereof.

5. A method according to any of claims 1 to 4, in which component C is 4,4'-diaminodiphenyl ether, 4,4'-(_p_-phenylenediaminediisopropylidene)bisaniline, 4,4'-diaminodiphenylmethane, _m_-phenylenediamine, _p_-phenylenediamine, 4,4'-(_m_-phenylenediisopropylene)-bisaniline, 2,2-bis[4-(4-aminophenoxy)phenyl]hexafluoropropane, or a mixture of two or more thereof.

6. A method according to any of claims 1 to 5, which includes the additional step of adding from 0.01 to 2% by weight of a surfactant to the solution of imide precursor.

7. A method of bonding together two surfaces, which comprises applying an imide precursor composition made by the method according to any of claims 1 to 6 to at least one of the surfaces, drying the applied coating, pressing the two surfaces together under pressure, and heating the assembly to bond the two surfaces together.

8. A method of making a fibre-reinforced composite structure, which comprises impregnating a porous sheet of woven or matted fibres with an imide precursor composition made by the method according to any of claims 1 to 7, drying the impregnated sheet, placing at least one of the dried sheets in a mould, applying pressure thereto, and heating the sheet(s) to give the composite structure.

9. A method according to claim 7 or 8, which includes the additional step of pre-curing the imide precursor after drying.